# EUROPEAN PATENT APPLICATION

(11) **EP 4 531 229 A1**
(43) Date of publication of application: **02.04.2025**
(21) Application number: 23200454.9
(22) Date of filing: 28.09.2023
(51) Int. Cl.: H02J 7/00, H02J 50/10, H02J 50/80, H04B 5/24

(54) **WIRELESS CHARGING DEVICE AND METHOD OF OPERATING THE SAME**

(71) Applicant: NXP B.V., 5656 AG Eindhoven (NL)
(72) Inventor: Haslinger, Dorian, 5656 AG Eindhoven (NL); Neophytou, Kyriakos, 5656 AG Eindhoven (NL); Vorraber, Marcel Philipp, 5656 AG Eindhoven (NL)
(74) Representative: Krott, Michel

(57) **Abstract**

In accordance with a first aspect of the present disclosure, a first wireless charging device is provided, comprising: an antenna and a power transmitter configured to charge an external device by transferring power to said external device through said antenna; a near field communication (NFC) unit configured to detect whether the external device is a passive NFC device; a controller configured to control the power transmitter in dependence on an output of the NFC unit, wherein said output indicates whether the external device is a passive NFC device; a decision unit configured to receive an NFC antenna load value from a second wireless charging device and to cause the NFC unit to detect whether the external device is a passive NFC device and the controller to control the power transmitter if a load on the antenna is higher than the NFC antenna load value received from the second wireless charging device. In accordance with a second aspect of the present disclosure, a corresponding method of operating a first wireless charging device is conceived.

## Description

### TECHNICAL FIELD

The present disclosure relates to a first wireless charging device. Furthermore, the present disclosure relates to a corresponding method of operating a first wireless charging device. In addition, the present disclosure relates to a charging system comprising the first wireless charging device and a second wireless charging device.

### BACKGROUND

Wireless charging systems typically comprise one or more wireless charging devices. For instance, such wireless charging devices may contain low-frequency (LF) power transmitters which are based on the Qi-standard. Qi is an open interface standard that defines wireless power transfer using inductive charging over distances of up to 4 cm; this standard has been developed by the Wireless Power Consortium (WPC). Thus, in this case, the wireless charging devices may also be referred to as WPC devices. In addition, wireless charging device often contain a near field communication unit (NFC) capable of detecting the presence and type of the external device which should potentially be charged. More specifically, the NFC unit is capable of detecting the presence and type of an NFC-enabled device which is in close proximity of the wireless charging device. In particular, the external device may be a passive NFC device (e.g., a tag or a transponder) or an active, typically battery-powered NFC device.

### SUMMARY

In accordance with a first aspect of the present disclosure, a first wireless charging device is provided, comprising: an antenna and a power transmitter configured to charge an external device by transferring power to said external device through said antenna; a near field communication (NFC) unit configured to detect whether the external device is a passive NFC device; a controller configured to control the power transmitter in dependence on an output of the NFC unit, wherein said output indicates whether the external device is a passive NFC device; a decision unit configured to receive an NFC antenna load value from a second wireless charging device and to cause the NFC unit to detect whether the external device is a passive NFC device and the controller to control the power transmitter if a load on the antenna is higher than the NFC antenna load value received from the second wireless charging device.

In one or more embodiments, the controller is further configured to prevent the power transmitter from charging the external device if the NFC unit has detected that the external device is a passive NFC device, or to reduce the amount of power transferred by the power transmitter if the NFC unit has detected that the external device is a passive NFC device.

In one or more embodiments, the controller is further configured to permit the power transmitter to charge the external device if the NFC unit has detected that the external device is not a passive NFC device.

In one or more embodiments, the power transmitter is a low frequency (LF) power transmitter configured to transfer power to the external device.

In one or more embodiments, the LF power transmitter is a Qi-based LF power transmitter.

In one or more embodiments, the decision unit is further configured to receive timing data from the second wireless charging device, and to cause the NFC unit to detect whether the external device is a passive NFC device and the controller to control the power transmitter in dependence on said timing data.

In one or more embodiments, the timing data include a time slot in which the second wireless charging device performs a detection for detecting whether the external device is a passive NFC device.

In one or more embodiments, the decision unit is configured to prevent the NFC unit from detecting whether the external device is a passive NFC device and the controller from controlling the power transmitter in said time slot.

In one or more embodiments, the NFC unit is further configured to operate in a low-power object detection mode, in order to detect the presence of the external device.

In one or more embodiments, the decision unit is configured to wake up the NFC unit if the presence of the external device is detected and if the load on the antenna is higher than the NFC antenna load value received from the second wireless charging device.

In one or more embodiments, the decision unit is configured to receive the NFC antenna load value from the second wireless charging device through a pre-established communication channel.

In one or more embodiments, the communication channel is based on the controller area network with flexible data rate (CAN FD) communication protocol.

In one or more embodiments, a charging system comprises a first wireless charging device of the kind set forth and a second wireless charging device, wherein said second wireless charging device is configured to transmit an NFC antenna load value to the first wireless charging device, said NFC antenna load value being indicative of a load on an NFC antenna integrated into the second wireless charging device.

In one or more embodiments, a vehicle comprises a charging system of the kind set forth.

In accordance with a second aspect of the present disclosure, a method of operating a first wireless charging device is conceived, said device comprising an antenna, a power transmitter, a near field communication, NFC, unit, a controller and a decision unit, the method comprising: receiving, by the decision unit, an NFC antenna load value from a second wireless charging device; causing, by the decision unit, the NFC unit to detect whether the external device is a passive NFC device and the controller to control the power transmitter if a load on the antenna is higher than the NFC antenna load value received from the second wireless charging device; controlling, by the controller, the power transmitter in dependence on an output of the NFC unit, wherein said output indicates whether the external device is a passive NFC device.

### DESCRIPTION OF DRAWINGS

Embodiments will be described in more detail with reference to the appended drawings.
Fig. 1 shows an illustrative embodiment of a first wireless charging device.
Fig. 2 shows an illustrative embodiment of a charging system.
Fig. 3 shows an illustrative embodiment of a method of operating a first wireless charging device.
Fig. 4 shows an illustrative embodiment of a communication flow.
Fig. 5 shows another illustrative embodiment of a communication flow.
Fig. 6 shows a further illustrative embodiment of a communication flow.
Fig. 7 shows an illustrative embodiment of a method of operating a WPC device.
Fig. 8A shows another illustrative embodiment of a method of operating a WPC device.
Fig. 8B shows a received amplitude of a first WPC device.
Fig. 8C shows a received amplitude of a second WPC device.

### DESCRIPTION OF EMBODIMENTS

Modem vehicles may be equipped with multiple wireless charging devices, for example Qi-based wireless charging devices, which are placed close to each other and which support between 15 and 80-watt charging. However, for a transmitted power which is higher than 5 Watts an external device which is accidentally in close proximity of the charging device may become damaged. For example, smart cards may become damaged (e.g., burned) if they are exposed to such a high transmitter power level. Therefore, a so-called card protection algorithm may be implemented. Such a algorithm has been described in the European patent application EP 4 207 614 A1. This algorithm distinguishes passive NFC device (e.g., cards, tags or transponders) from active NFC devices, and prevents the charging or reduces the amount of power transmitted by the charging device if the external device is a passive NFC device. As used herein, the term "passive device" refers to a device which does not have a battery, but is powered by the field. It is noted that a passive device may contain one or more storage elements for temporary storing energy extracted from the field. In contrast, the term "active device" refers to a device which has an internal power source, such as a battery.

The cost of wireless charging devices has decreased. For this reason, the use of multiple wireless charging devices which are in close proximity of each other has increased. For example, in a vehicle a wireless charging device may be provided for the driver, while another wireless charging device may be provided for the passenger sitting next to the driver. In that case, both wireless charging devices may be integrated into a console located between the driver and the passenger. Then, both wireless charging devices will be equipped with an NFC antenna by means of which the type of external device can be determined (i.e., passive or active), so that the aforementioned card protection algorithm can be implemented. However, in such a case the two NFC antennas may be so close to each other, that it becomes difficult to determine whether a specific external device is placed on the first wireless charging device or on the second wireless charging device. This, in turn, makes it difficult to determine which of the two wireless charging devices should activate its card protection algorithm.

Now discussed is a first wireless charging device, which has an improved capability of determining whether or not it should activate its card protection algorithm. Furthermore, a corresponding method of operating a first wireless charging device is discussed.

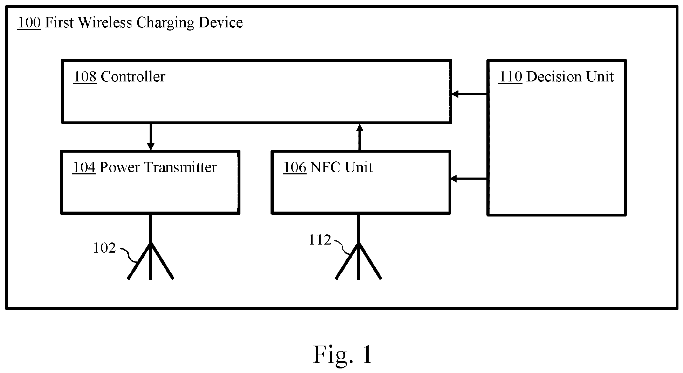

**Fig. 1** shows an illustrative embodiment of a first wireless charging device 100. The first wireless charging device 100 comprises an antenna 102, a power transmitter 104, an NFC unit 106, an NFC antenna 112, a controller 108 and a decision unit 110. The power transmitter 104 is configured to charge an external device (not shown) by transferring power to said external device through said antenna. Furthermore, the NFC unit 106 is configured to detect whether the external device is a passive NFC device. Furthermore, the controller 108 is configured to control the power transmitter in dependence on an output of the NFC unit, wherein said output indicates whether the external device is a passive NFC device. Thereby, the NFC unit 106 and controller 108 implement a so-called card protection algorithm. Furthermore, the decision unit 110 is configured to receive an NFC antenna load value from a second wireless charging device (not shown) and to cause the NFC unit 106 to detect whether the external device is a passive NFC device and the controller 108 to control the power transmitter if a load on the antenna 102 is higher than the NFC antenna load value received from the second wireless charging device. In this way, the card protection algorithm implemented by the NFC unit 106 and the controller 108 is activated only if it is likely that the external device is closer to the first wireless charging device 100 than to the second wireless charging device. In other words, the first wireless charging device 100 has an improved capability of determining whether or not it should activate its card protection algorithm. It is noted that the term "NFC antenna load value" may refer to any kind of value which is indicative of the load on the NFC antenna. Such a value may, for example, consist of an output of a current measurement performed on the NFC antenna, as shown in Table 1.

In one or more embodiments, the controller is further configured to prevent the power transmitter from charging the external device if the NFC unit has detected that the external device is a passive NFC device, or to reduce the amount of power transferred by the power transmitter if the NFC unit has detected that the external device is a passive NFC device. This facilitates avoiding damage to the external device, because it may be ensured that no excessive amount of power is transferred to a passive NFC device. In one or more embodiments, the controller is further configured to permit the power transmitter to charge the external device if the NFC unit has detected that the external device is not a passive NFC device. In this way, the charging process may start relatively quickly, after it has been verified that the external device will most likely not become damaged. In a practical implementation, the power transmitter is a low frequency (LF) power transmitter configured to transfer power to the external device. For example, the LF power transmitter may be a Qi-based LF power transmitter.

In one or more embodiments, the decision unit is further configured to receive timing data from the second wireless charging device, and to cause the NFC unit to detect whether the external device is a passive NFC device and the controller to control the power transmitter in dependence on said timing data. In this way, collisions with NFC transmissions by the second wireless charging device can be avoided more easily. For instance, the second wireless charging device may also decide to initiate a card protection algorithm that involves NFC. In that case, the NFC transmissions of the first wireless charging device can be synchronized with the NFC transmissions of the second wireless charging device, to avoid collisions or mutual disturbances. In a practical implementation, the timing data include a time slot in which the second wireless charging device performs a detection for detecting whether the external device is a passive NFC device. Furthermore, in a practical implementation, the decision unit is configured to prevent the NFC unit from detecting whether the external device is a passive NFC device and the controller from controlling the power transmitter in said time slot. Thus, the decision unit effectively prevents the first wireless charging device from executing a card protection algorithm that involves NFC in a time slot in which the second wireless charging devices executes a similar algorithm.

In one or more embodiments, the NFC unit is further configured to operate in a low-power object detection mode, in order to detect the presence of the external device. In this way, the presence of the external device may be detected at low power, before it is detected whether said external device is a passive NFC device. In one or more embodiments, the decision unit is configured to wake up the NFC unit if the presence of the external device is detected and if the load on the antenna is higher than the NFC antenna load value received from the second wireless charging device. In this way, the NFC unit is only woken up when necessary, in particular for detecting whether the external device is a passive NFC device. In a practical implementation, the decision unit is configured to receive the NFC antenna load value from the second wireless charging device through a pre-established communication channel. Furthermore, in a practical implementation, the communication channel is based on the controller area network with flexible data rate (CAN FD) communication protocol. In this way, a communication channel which is commonly used in vehicles, for example, is used for transmitting the NFC antenna load value, so that no additional communication infrastructure may be needed.

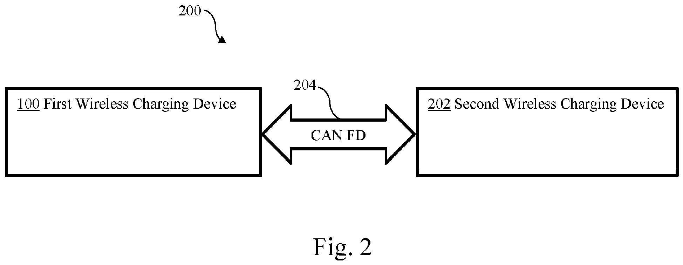

**Fig. 2** shows an illustrative embodiment of a charging system 200. The charging system 200 comprises a first wireless charging device 100 of the kind set forth above, and a second wireless charging device 202. It is noted that the second wireless charging device 202 may comprise the same components as the first wireless charging device 100. The second wireless charging device 202 is configured to transmit an NFC antenna load value to the first wireless charging device, using a CAN FD communication protocol 204. The NFC antenna load value is indicative of a load on an NFC antenna (not shown) integrated into the second wireless charging device 202. In this way, a charging system 200 is provided comprising multiple wireless charging devices 100, 202, having an improved capability of determining which of the charging devices 100, 202 should activate a built-in card protection algorithm.

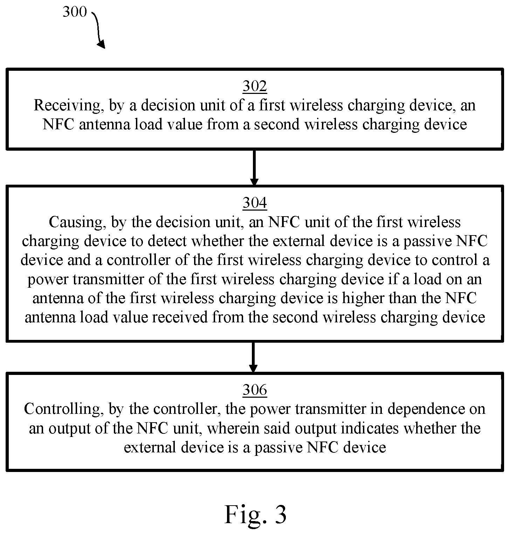

**Fig. 3** shows an illustrative embodiment of a method 300 of operating a first wireless charging device. The method 300 comprises the following steps. At 302, a decision unit of a first wireless charging device receives an NFC antenna load value from a second wireless charging device. Furthermore, at 304, the decision unit causes an NFC unit of the first wireless charging device to detect whether the external device is a passive NFC device and a controller of the first wireless charging device to control a power transmitter of the first wireless charging device if a load on an antenna of the first wireless charging device is higher than the NFC antenna load value received from the second wireless charging device. Furthermore, at 306, the controller controls the power transmitter in dependence on an output of the NFC unit, wherein said output indicates whether the external device is a passive NFC device. As mentioned above, in this way, the card protection algorithm implemented by the NFC unit and the controller of the first wireless charging device is activated only if it is likely that the external device is closer to the first wireless charging device than to the second wireless charging device.

At least some of the above-described embodiments facilitate scheduling of the NFC active time to avoid that NFC readers which are integrated into wireless charging devices disturb each other. In particular, it may be avoided that said NFC readers are active in parallel, which could result in a wrong NFC detection. Furthermore, an external NFC device may be localized based on loading conditions (e.g., antenna current, received signal strength indicator, and I/Q amplitude characteristics). Thereby, it may be determined on which NFC reader a card has been placed, or whether a card is placed between NFC readers, for example. Furthermore, based on the localization and time synchronization (i.e., scheduling) a more reliable card protection may be performed. When the charging system is integrated into a vehicle, the existence of a second wireless charging device may be "learned" during the end-of-line testing or during the power-on phase in the vehicle. More specifically, to enable NFC localization and NFC scheduling a first wireless charging device may be informed that a second wireless charging device exists or may exist. This may be done after powering the vehicle, for example.

In an example, two wireless charging device including NFC readers may be placed close to each other. The wireless charging devices may include WPC (Qi) and may be connected to the same CAN/supply domain. During a learning phase, for example during end-of-line testing when the wireless charging devices are mounted into a vehicle, the devices may be synchronized via an out-of-band radio, e.g. CAN or LIN. Specifically, data indicative of the presence of the second wireless charging device, the location (i.e., driver (WPC1) or passenger (WPC2) position) and timing synchronization may be shared. Alternatively, these data may always be distributed during powering on of the modules. For instance, the first wireless charging device (WPC 1) may send a synchronization request via CAN, and if a second wireless charging device (WPC 2) is connected, then the latter may answer with a synchronization acknowledgement. Then, during an regular operational phase, to avoid collisions or disturbance between the NFC readers, scheduling of the active NFC may be applied. This scheduling activity may start after power-up. For example, a CAN synchronization request and synchronization acknowledgement may be used for the scheduling.

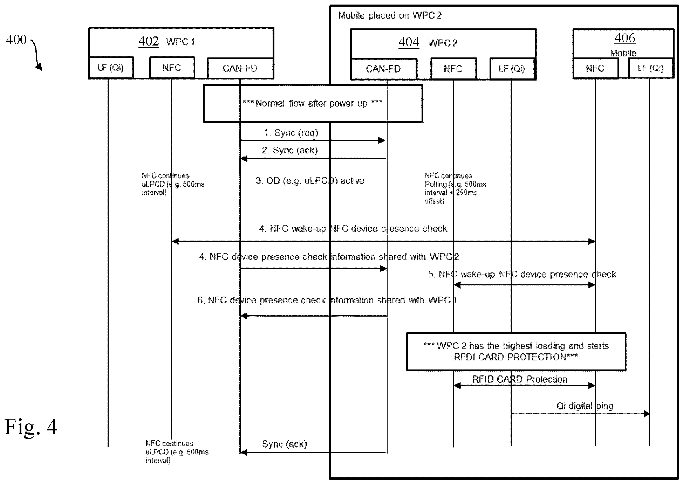

**Fig. 4** shows an illustrative embodiment of a communication flow 400. The communication flow 400 involves a first WPC device 402, a second WPC device 404 and a mobile device 406. In particular, the communication flow 400 illustrates a first use case scenario, in which a mobile device 406 (e.g., a phone) is placed on the second WPC device 404. Both WPC devices 402, 404 are integrated into a vehicle, for example a car. To save current consumption the first WPC device 402 and the second WPC device 404 may be connected to a power domain, which is disabled while the car is in power OFF mode. In case the car enters the ON mode, the first WPC device 402 and the second WPC device 404 may be switched on by a power-on of the power domain. After power up a time synchronization process is started to ensure that there is no mutual disturbance between the first WPC device 402 and the second WPC device 404. In particular, the first WPC device 402 sends a synchronization request to the second WPC device 404 via a controller area network (CAN). This synchronization request is used by the second WPC device 404 to synchronize the internal timer. Then, the second WPC device 404 confirms the synchronization by an acknowledgement. Subsequently, the first WPC device 402 uses this acknowledgement to perform an internal timer synchronization.

The first WPC device 402 and the second WPC device 404 may enter into a low-power objection detection using a known method, such as ultra low-power card detection (uLPCD). As mentioned above, the first WPC device 402 and the second WPC device 404 are time-synchronized to avoid NFC collision or disturbance. After the first WPC device 402 detects an object in its proximity, it may perform a so-called "presence check". This presence check is carried out by transmitting a low-level command for each type of NFC technology (e.g. ReqA, ReqB, etc.). During the presence check the loading is measured (e.g., the antenna current) and the received signal strength. The first WPC device 402 shares this information with the second WPC device 404. The second WPC device 404 has also detected the object, performs the same check and shares the information with the first WPC device 402. By comparing the information from the first WPC device 402 and the second WPC device 404, it can be decided that the object (i.e., the mobile device 406) has been placed on the second WPC device 404. Thus, the second WPC device 404 may activate its card protection algorithm. This algorithm determines that the object is an active NFC device, for example by applying a digital or analog sensing method or analyzing a back-link characteristic. Since the object is an active NFC device, the second WPC device 404 allows charging, and sends a Qi digital ping. Finally, the second WPC device 404 sends a synchronization acknowledgement to the first WPC device 402, and the first WPC device 402 will start object detection again based on an agreed time grid and can use the synchronization acknowledgement for the timer synchronization.

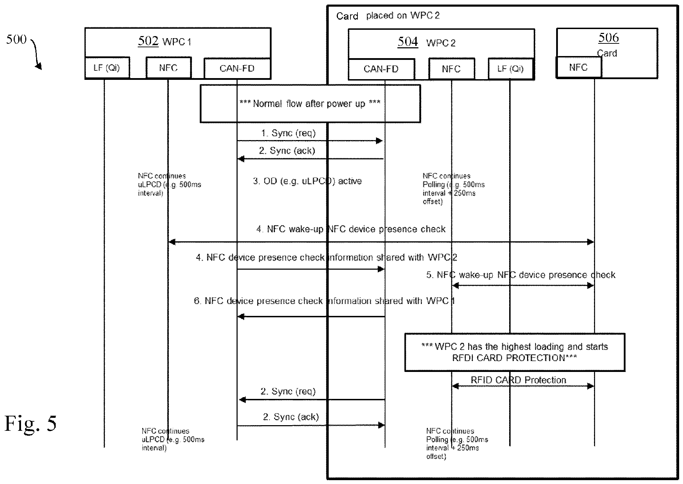

**Fig. 5** shows another illustrative embodiment of a communication flow 500. The communication flow 500 involves a first WPC device 502, a second WPC device 504 and a card 506. In particular, the communication flow 500 illustrates a second use case scenario, in which a card 506 is placed on the second WPC device 504. Both WPC devices 502, 504 are integrated into a vehicle, for example a car. To save current consumption the first WPC device 502 and the second WPC device 504 may be connected to a power domain, which is disabled while the car is in power OFF mode. In case the car enters the ON mode, the first WPC device 502 and the second WPC device 504 may be switched on by a power-on of the power domain. After power up a time synchronization process is started to ensure that there is no mutual disturbance between the first WPC device 502 and the second WPC device 504. In particular, the first WPC device 502 sends a synchronization request to the second WPC device 504 via a CAN. This synchronization request is used by the second WPC device 504 to synchronize the internal timer. Then, the second WPC device 504 confirms the synchronization by an acknowledgement. Subsequently, the first WPC device 502 uses this acknowledgement to perform an internal timer synchronization.

The first WPC device 502 and the second WPC device 504 may enter into a low-power objection detection using a known method, such as uLPCD. As mentioned above, the first WPC device 502 and the second WPC device 504 are time-synchronized to avoid NFC collision or disturbance. After the first WPC device 502 detects an object in its proximity, it may perform a presence check. This presence check is carried out by transmitting a low-level command for each type of NFC technology (e.g. ReqA, ReqB, etc.). During the presence check the loading is measured (e.g., the antenna current) and the received signal strength. The first WPC device 502 shares this information with the second WPC device 504. The second WPC device 504 has also detected the object, performs the same check and shares the information with the first WPC device 502. By comparing the information from the first WPC device 502 and the second WPC device 504, it can be decided that the object (i.e., the card 506) has been placed on the second WPC device 504. Thus, the second WPC device 504 may activate its card protection algorithm. This algorithm determines that the object is a passive NFC device, for example by applying a digital or analog sensing method or analyzing a back-link characteristic. Since the object is passive NFC device, the second WPC device 504 prevents the charging. Finally, the second WPC device 504 sends a synchronization acknowledgement to the first WPC device 502, and the first WPC device 502 will start object detection again based on an agreed time grid and can use the synchronization acknowledgement for the timer synchronization.

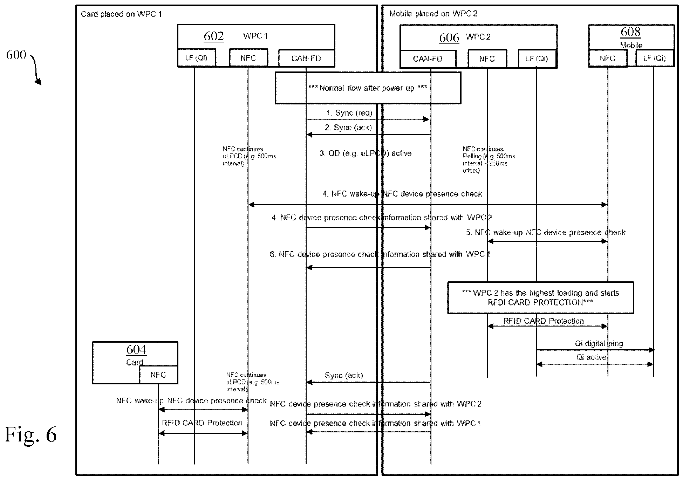

**Fig. 6** shows a further illustrative embodiment of a communication flow 600. The communication flow 600 involves a first WPC device 602, a second WPC device 606, a card 604 and a mobile device 608 (e.g., a phone). In particular, the communication flow 600 illustrates a third use case scenario, in which a mobile device 608 is placed on the second WPC device 606 and a card 604 is placed on the first WPC device 602. Both WPC devices 602, 606 are integrated into a vehicle, for example a car. To save current consumption the first WPC device 602 and the second WPC device 606 may be connected to a power domain, which is disabled while the car is in power OFF mode. In case the car enters the ON mode, the first WPC device 602 and the second WPC device 606 may be switched on by a power-on of the power domain. After power up a time synchronization process is started to ensure that there is no mutual disturbance between the first WPC device 602 and the second WPC device 606. In particular, the first WPC device 602 sends a synchronization request to the second WPC device 606 via a CAN. This synchronization request is used by the second WPC device 606 to synchronize the internal timer. Then, the second WPC device 606 confirms the synchronization by an acknowledgement. Subsequently, the first WPC device 602 uses this acknowledgement to perform an internal timer synchronization.

The first WPC device 602 and the second WPC device 606 may enter into a low-power objection detection using a known method, such as uLPCD. As mentioned above, the first WPC device 602 and the second WPC device 606 are time-synchronized to avoid NFC collision or disturbance. After the first WPC device 602 detects an obj ect in its proximity, it may perform a presence check. This presence check is carried out by transmitting a low-level command for each type of NFC technology (e.g. ReqA, ReqB, etc.). During the presence check the loading is measured (e.g., the antenna current) and the received signal strength. The first WPC device 602 shares this information with the second WPC device 606. The second WPC device 606 has also detected the object, performs the same check and shares the information with the first WPC device 602. By comparing the information from the first WPC device 602 and the second WPC device 606, it can be decided that the object (i.e., the mobile device 608) has been placed on the second WPC device 606. Thus, the second WPC device 606 may activate its card protection algorithm. This algorithm determines that the object is an active NFC device, for example by applying a digital or analog sensing method or analyzing a back-link characteristic. Since the object is an active NFC device, the second WPC device 608 allows charging, and sends a Qi digital ping. Then, the second WPC device 606 sends a synchronization acknowledgement to the first WPC device 602, and the first WPC device 602 will start object detection again based on an agreed time grid and can use the synchronization acknowledgement for the timer synchronization.

Subsequently, the first WPC device 602 detects another object and performs the above-mentioned presence check. Then, the first WPC device 602 shares this information with the second WPC device 606. Furthermore, the second WPC device 606 shares information with the first WPC device 602, which is indicative of the fact that the second WPC device 606 has not detected another object. Thus, the first WPC device 602 may activate its card protection algorithm. This algorithm determines that the object is a passive NFC device. Since the object is a passive NFC device, the first WPC device 602 prevents the charging and then returns to the object-detection mode.

To determine on which WPC device an NFC object is placed, the loading of the NFC antennas of the WPC devices may be evaluated. Since an NFC object will detune the NFC antenna the current that drives the antenna will change. Hence, the current of the antenna can be measured to check if it is loaded. Even though the antennas can be placed close to each other, an NFC object placed to a first WPC device (WPC 1) will not impact the loading of the NFC antenna of a second WPC device (WPC 2), and vice versa. This method of NFC object localization is very reliable for different scenarios, as shown in Table 1. In said table, three different scenarios are illustrated. In the first scenario, no NFC object is placed on either of two WPC devices. In the second scenario, an NFC-enabled mobile phone is placed on WPC 1, while no NFC object is placed on WPC 2. In the third scenario, an NFC-enabled mobile phone is placed on WPC 1, and an NFC card is placed on WPC 2.

**Table 1**

| **Scenario** | **WPC 1 Current (mA)** | **WPC 2 Current (mA)** | **Decision** |
|---|---|---|---|
| 1 | 157 | 160 | No object |
| 2 | 260 | 152 | Object at WPC 1 |
| 3 | 260 | 225 | Objects at WPC 1 and WPC 2 |

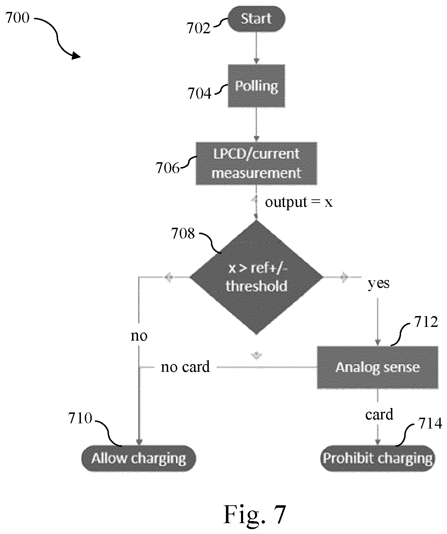

**Fig. 7** shows an illustrative embodiment of a method 700 of operating a WPC device. The method 700 starts at 702. At 704, a polling operation is performed by the WPC device. At 706, a low-power card detection or current measurement is performed by the WPC device. If the output of this operation exceeds a predefined threshold 708, then an analog sense 712 operation is performed in order to determine whether the detected object is a passive NFC device (e.g., a card) or not. As mentioned above, this analog sense 712 operation may determine the load on the antenna of the WPC device. If the output of this operation that a card is present, then charging is prohibited 714. Otherwise, or if the output of the operation performed at 706 is below the threshold 708, charging is allowed 710.

In particular, if it was determined that an NFC object is placed on the WPC device, the card protection algorithm is started. The outcome of the algorithm indicates whether or not the NFC object is a passive NFC device. If it is determined that the NFC object is a passive NFC device, then the charging will be prevented. On the other hand, if it is determined that the NFC object is an active NFC device, then the charging will be allowed. In the above-mentioned first scenario, the card protection algorithm will not be started for either of the WPC devices. In the second scenario, the card protection algorithm will be executed only for WPC 1. Since the NFC object placed on WPC 1 is a mobile phone, the outcome of the card protection algorithm will be to allow charging. In the third scenario, both WPC devices will execute the card protection algorithm. The card protection algorithm executed by WPC 1 will allow charging since a mobile phone is placed on WPC 1. However, the card protection algorithm executed by WPC 2 will prohibit charging since an NFC card is placed on WPC 2.

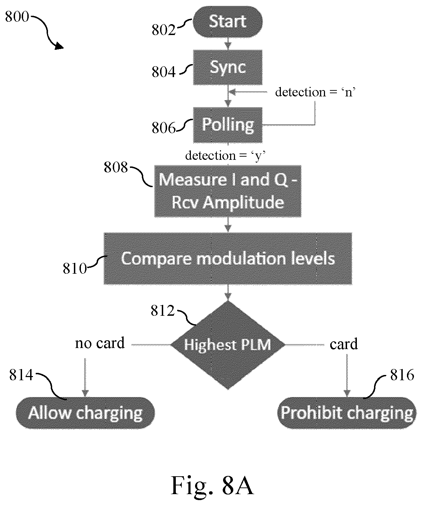

**Fig. 8A** shows another illustrative embodiment of a method 800 of operating a WPC device. The method 800 starts at 802. At 804, a synchronization operation is performed by the WPC device. At 806, a polling operation is performed by the WPC device. At 808, the received I- and Q-amplitude is measured, and at 810, the modulation level of the WPC device is compared with the modulation level reported by another WPC device. If the WPC device has the highest modulation level of the two devices, it may be concluded 812 that it applies passive load modulation (PLM). In that case, it may also be concluded that the WPC device is a passive NFC device, e.g. a card. Then, charging is prohibited 816. Otherwise, it may be concluded 812 that the WPC device applies active load modulation (ALM), and charging may be allowed 814.

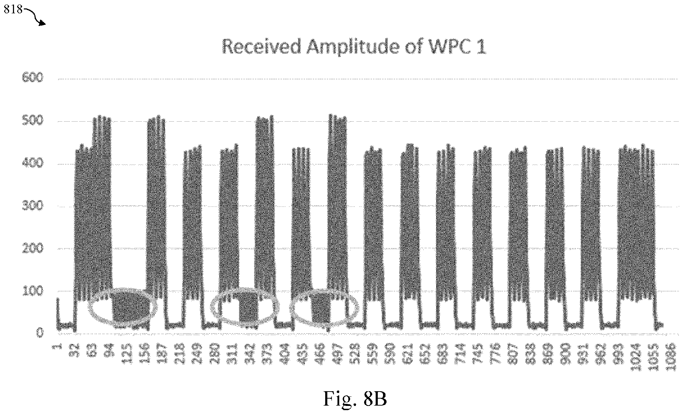

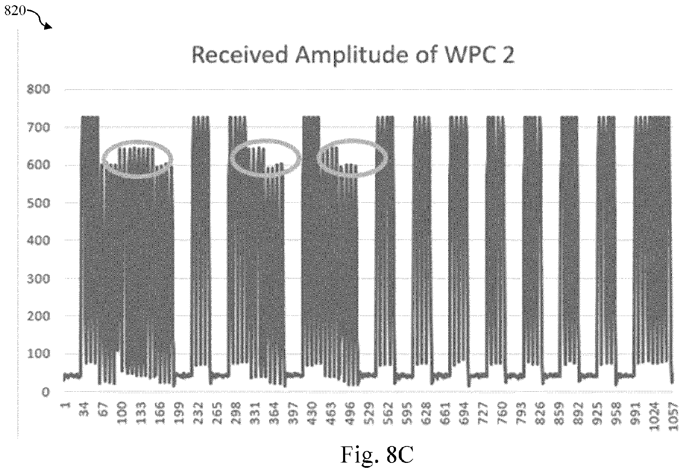

**Figs. 8B** **and** **8C** show a received amplitude 818 of a first WPC device, and a received amplitude 820 of a second WPC device, respectively. In particular, Figs. 8A to 8C show how the above-mentioned third scenario can be solved be comparing the amplitude of the received modulation. On the x-axis of Figs. 8B and 8C, a time index is shown, and on the y-axis an amplitude index is shown. The amplitude of the modulation can be acquired by analyzing the output data of the I- and Q-receiver of the NFC device. A card/tag device uses PLM, while an NFC reader device that emulates a card (e.g., a mobile phone) uses ALM and therefore they can easily be distinguished from each other. In the third scenario, both WPC devices may measure the amplitude of the received modulation and compare it with each other. Figs. 8B and 8C shows examples of received amplitude measurements in this scenario. It can be seen that the card response is much higher on WPC 2. Therefore, it may be concluded that WPC 2 should prohibit charging and WPC 1 should allow charging.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: first wireless charging device
- 102: antenna
- 104: power transmitter
- 106: NFC unit
- 108: controller
- 110: decision unit
- 112: NFC antenna
- 200: charging system
- 202: second wireless charging system
- 204: CAN FD communication protocol
- 300: method of operating a first wireless charging device
- 302: receiving, by a decision unit of a first wireless charging device, an NFC antenna load value from a second wireless charging device
- 304: causing, by the decision unit, an NFC unit of the first wireless charging device to detect whether the external device is a passive NFC device and a controller of the first wireless charging device to control a power transmitter of the first wireless charging device if a load on an antenna of the first wireless charging device is higher than the NFC antenna load value received from the second wireless charging device
- 306: controlling, by the controller, the power transmitter in dependence on an output of the NFC unit, wherein said output indicates whether the external device is a passive NFC device
- 400: communication flow
- 402: first WPC device
- 404: second WPC device
- 406: mobile device
- 500: communication flow
- 502: first WPC device
- 504: second WPC device
- 506: card
- 600: communication flow
- 602: first WPC device
- 604: card
- 606: second WPC device
- 608: mobile device
- 700: method of operating a WPC device
- 702: start
- 704: polling
- 706: LPCD/current measurement
- 708: x > ref +/- threshold
- 710: allow charging
- 712: analog sense
- 714: prohibit charging
- 800: method of operating a WPC device
- 802: start
- 804: sync
- 806: polling
- 808: measure I- and Q-Rcv amplitude
- 810: compare modulation levels
- 812: highest PLM
- 814: allow charging
- 816: prohibit charging
- 818: received amplitude of a first WPC device
- 820: received amplitude of a second WPC device

## Claims

1. A first wireless charging device, comprising:
an antenna and a power transmitter configured to charge an external device by transferring power to said external device through said antenna;
a near field communication, NFC, unit configured to detect whether the external device is a passive NFC device;
a controller configured to control the power transmitter in dependence on an output of the NFC unit, wherein said output indicates whether the external device is a passive NFC device;
a decision unit configured to receive an NFC antenna load value from a second wireless charging device and to cause the NFC unit to detect whether the external device is a passive NFC device and the controller to control the power transmitter if a load on the antenna is higher than the NFC antenna load value received from the second wireless charging device.

2. The device of claim 1, wherein the controller is further configured to prevent the power transmitter from charging the external device if the NFC unit has detected that the external device is a passive NFC device, or to reduce the amount of power transferred by the power transmitter if the NFC unit has detected that the external device is a passive NFC device.

3. The device of claim 1 or 2, wherein the controller is further configured to permit the power transmitter to charge the external device if the NFC unit has detected that the external device is not a passive NFC device.

4. The device of any preceding claim, wherein the power transmitter is a low frequency, LF, power transmitter configured to transfer power to the external device.

5. The device of claim 4, wherein the LF power transmitter is a Qi-based LF power transmitter.

6. The device of any preceding claim, wherein the decision unit is further configured to receive timing data from the second wireless charging device, and to cause the NFC unit to detect whether the external device is a passive NFC device and the controller to control the power transmitter in dependence on said timing data.

7. The device of claim 6, wherein the timing data include a time slot in which the second wireless charging device performs a detection for detecting whether the external device is a passive NFC device.

8. The device of claim 7, wherein the decision unit is configured to prevent the NFC unit from detecting whether the external device is a passive NFC device and the controller from controlling the power transmitter in said time slot.

9. The device of any preceding claim, wherein the NFC unit is further configured to operate in a low-power object detection mode, in order to detect the presence of the external device.

10. The device of claim 9, wherein the decision unit is configured to wake up the NFC unit if the presence of the external device is detected and if the load on the antenna is higher than the NFC antenna load value received from the second wireless charging device.

11. The device of any preceding claim, wherein the decision unit is configured to receive the NFC antenna load value from the second wireless charging device through a pre-established communication channel.

12. The device of claim 11, wherein the communication channel is based on the controller area network with flexible data rate, CAN FD, communication protocol.

13. A charging system comprising the first wireless charging device of any preceding claim and a second wireless charging device, wherein said second wireless charging device is configured to transmit an NFC antenna load value to the first wireless charging device, said NFC antenna load value being indicative of a load on an NFC antenna integrated into the second wireless charging device.

14. A vehicle comprising the charging system of claim 13.

15. A method of operating a first wireless charging device, said device comprising an antenna, a power transmitter, a near field communication, NFC, unit, a controller and a decision unit, the method comprising:
receiving, by the decision unit, an NFC antenna load value from a second wireless charging device;
causing, by the decision unit, the NFC unit to detect whether the external device is a passive NFC device and the controller to control the power transmitter if a load on the antenna is higher than the NFC antenna load value received from the second wireless charging device;
controlling, by the controller, the power transmitter in dependence on an output of the NFC unit, wherein said output indicates whether the external device is a passive NFC device.

## Amended claims

### Amended claims in accordance with Rule 137(2) EPC.

1. A first wireless charging device (100), comprising:
an antenna (102) and a power transmitter (104) configured to charge an external device by transferring power to said external device through said antenna (102);
a near field communication, NFC, unit (106) configured to detect whether the external device is a passive NFC device;
a controller (108) configured to control the power transmitter (104) in dependence on an output of the NFC unit (106, wherein said output indicates whether the external device is a passive NFC device;
**characterized in that** the first wireless charging device (100) further comprises a decision unit (110) configured to receive an NFC antenna load value from a second wireless charging device (202) and to cause the NFC unit (106) to detect whether the external device is a passive NFC device and the controller to control the power transmitter (104) only if a load on the antenna (102) is higher than the NFC antenna load value received from the second wireless charging device (202).

2. The device (100) of claim 1, wherein the controller (108) is further configured to prevent the power transmitter (104) from charging the external device if the NFC unit (106) has detected that the external device is a passive NFC device, or to reduce the amount of power transferred by the power transmitter (104) if the NFC unit (106) has detected that the external device is a passive NFC device.

3. The device (100) of claim 1 or 2, wherein the controller (108) is further configured to permit the power transmitter (104) to charge the external device if the NFC unit (106) has detected that the external device is not a passive NFC device.

4. The device (100) of any preceding claim, wherein the power transmitter (104) is a low frequency, LF, power transmitter configured to transfer power to the external device.

5. The device (100) of claim 4, wherein the LF power transmitter is a Qi-based LF power transmitter.

6. The device (100) of any preceding claim, wherein the decision unit (110) is further configured to receive timing data from the second wireless charging device (202), and to cause the NFC unit (106) to detect whether the external device is a passive NFC device and the controller (108) to control the power transmitter (104) in dependence on said timing data.

7. The device (100) of claim 6, wherein the timing data include a time slot in which the second wireless charging device (202) performs a detection for detecting whether the external device is a passive NFC device.

8. The device (100) of claim 7, wherein the decision unit (110) is configured to prevent the NFC unit (106) from detecting whether the external device is a passive NFC device and the controller (108) from controlling the power transmitter in said time slot.

9. The device (100) of any preceding claim, wherein the NFC unit (106) is further configured to operate in a low-power object detection mode, in order to detect the presence of the external device.

10. The device (100) of claim 9, wherein the decision unit (110) is configured to wake up the NFC unit (106) if the presence of the external device is detected and if the load on the antenna (102) is higher than the NFC antenna load value received from the second wireless charging device (202).

11. The device (100) of any preceding claim, wherein the decision unit (110) is configured to receive the NFC antenna load value from the second wireless charging device (202) through a pre-established communication channel (204).

12. The device (100) of claim 11, wherein the communication channel (204) is based on the controller area network with flexible data rate, CAN FD, communication protocol.

13. A charging system (200) comprising the first wireless charging device (100) of any preceding claim and a second wireless charging device (202), wherein said second wireless charging device (202) is configured to transmit an NFC antenna load value to the first wireless charging device (100), said NFC antenna load value being indicative of a load on an NFC antenna integrated into the second wireless charging device (202).

14. A vehicle comprising the charging system (200) of claim 13.

15. A method (300) of operating a first wireless charging device, said device comprising an antenna, a power transmitter, a near field communication, NFC, unit, a controller and a decision unit, the method comprising:
receiving (302), by the decision unit, an NFC antenna load value from a second wireless charging device;
causing (304), by the decision unit, the NFC unit to detect whether the external device is a passive NFC device and the controller to control the power transmitter only if a load on the antenna is higher than the NFC antenna load value received from the second wireless charging device;
controlling (306), by the controller, the power transmitter in dependence on an output of the NFC unit, wherein said output indicates whether the external device is a passive NFC device.
